# EUROPEAN PATENT APPLICATION

(11) **EP 1 647 314 A1**
(43) Date of publication of application: **19.04.2006**
(21) Application number: 04024255.4
(22) Date of filing: 12.10.2004
(51) Int. Cl.: A63F 13/08

(54) **Electronic game device**

(71) Applicant: Gamze Ltd, Tsim Sha Tsui East (HK)
(72) Inventor: Lo, Sum Gamze Ltd, Tsim Sha Tsui East Hong Kong (CN)
(74) Representative: Tomkinson, Alexandra

(57) **Abstract**

An electronic game device is provided which e includes a body portion and a component portion. The component portion includes three display screens, each of which is provided for the display of a particular game to be played via a user of the device. The body portion and the component portions are arranged such that selective movement of or between the same allows the selection of a particular game to be played.

## Description

The invention which is the subject of this application is an electronic gaming device of the type which has a display screen and at least one control key, but more typically a range of control keys, which can be selectively operated by a user to control the level of activation of the device and/or control the display screen.

The use of electronic game devices is well known and these devices range in levels of complexity, expense and ongoing utility. However, it is commonly the case that, certainly with portable gaming devices, the same are required to be capable of being held in the hand of a user and include a display screen on which a game or games can be displayed for interaction between the user and the display screen via the control with the aim typically being for the user to obtain the highest score.

Typically, said devices can be divided into two forms, a first form in which the device acts as a console with the game which is to be played on the device controlled by the insertion of a particular cartridge into the device. The control circuitry for the particular game is held on the cartridge and the device therefore acts as a console for the reception of the cartridge and the provision of the display screen and control keys via which the game stored on the cartridge, can be played. While these devices are popular, a problem with the same is that the devices themselves can be relatively expensive and, furthermore, the cartridges which hold the game details, can also be expensive.

An alternative form of device is the type which has the details of one or a range of games held within the device itself such that the cartridge is not required to be inserted into the device.

Once again, this form of device includes a display screen and control keys for selective use by the user.

Typically, devices of this type include one game for display on a display screen in which case the device can, after a while, become obsolete once the user becomes bored with the game and the device because it is not flexible in terms of games which can be played and may be discarded, which represents a waste of money.

The aim of the present invention is to provide an electronic game device of a type which does not require the insertion of a cartridge therein to provide a particular game but rather includes as an integral part thereof, a component which incorporates means for allowing a plurality of games to be selected for play.

In a first aspect of the invention, there is provided an electronic game device, said device including a body portion and a component portion, wherein said component portion includes two or more display screens, each of said display screens provided for the display of a particular game to be played via the device and the body portion and the component portion are arranged such that selective movement between the body and component portions allows the selection of a particular game to be played.

The component portion has a series of spaced apart display screens located thereon and at any given time at least one of the display screens can be activated to allow the device to be used to play a game thereon.

Preferably the display screens which are not activated at any given instant are hidden from view by the body portion.

Preferably the body portion is provided with at least one viewing location to allow at least one display screen to be viewed. The viewing location can be at least one window, aperture or recess defined in the body portion.

Preferably a display screen is activated by moving the component portion and/or body portion into a pre-determined position or in a pre-determined manner. This pre-determined position typically corresponds to the at least one viewing location.

In one embodiment, the component and body portions are formed such that when one of the display screens is moved to said pre-determined position for activation, there is provided retaining means which act to releasably retain the component portion in said position with respect to the body portion. In one embodiment, the action of the retaining means on the component and body portion can be overcome by the exertion of a moving force on either or both of the component and body portions, thereby allowing the component and body portion to be selectively moved to bring a further display screen into position for activation. The moving force is typically exerted by a user twisting or rotating one of the component portion or body portion with respect to the other of said component portion or body portion.

Preferably the retaining means includes at least one resilient member interposed between the body portion and the component portion. At least one indent or recess can be provided on the portion opposite to the portion on which the resilient member is provided to allow engagement of the at least one resilient member therein.

When said display screen is activated, the user can interact with the display screen via one or one of a plurality of selectable keys so as to control the game and the display shown on the display screen.

Typically, when one of the display screens is provided in a position for activation, electrical contact is made between the display screen and game control circuitry for said display screen, thereby activating the display screen and connecting the same to the control keys.

Typically, each of the display screens is linked to a specific game control circuitry but the control keys used are common to each of the games. Typically the control keys are mounted on the body portion of the device.

In one embodiment, the component portion has three display screens provided thereon, each a spaced distance apart.

In one embodiment, the body portion includes the control keys, a power source and sound emitting means so that, when activated, a sound or sounds relevant to the game being played can be emitted.

In one embodiment, the component portion is rotatable with respect to the body portion so as to allow the selective positioning and activation of the display screens located on the same.

In one embodiment, the component portion is mounted on a spindle with respect to the body portion and rotatable about the spindle which acts as the axis of rotation.

It envisaged that the number of display screens can be selected to suit particular required functions of the device and the number, size and spacing of the display screens on the component portion can be selected accordingly.

In one embodiment, the device is provided as a hand held game play device.

Typically, the component portion and the body portion include mutually located electrical contacts such that when one of the display screens is in a retained position for use, electrical contact is achieved between the body portion and the component portion.

Typically, the integrated circuit which is used to control and provide the game functions is provided on the component portion and is activated when electrical contact is made with the body portion.

In one embodiment, the display screens used are liquid crystal diode (LCD) display screens.

Preferably the component portion includes a housing in which two or more aperture or windows are provided for the location of said two or more display screens.

In a further function of the apparatus, there is provided a prompt facility to indicate to the user of the device, when they have completed a game displayed on a first display screen, that further display screens are available and that they should move the component portion with regard to the body portion to activate and access the next display screen. In this arrangement, each of the display screens can provide different games or the same game but different levels or aspects of the same.

In one embodiment, the component portion is disc shaped and is located with a body portion which has a greater diameter than the said disc component portion, the disc component portion is capable of rotation within the outer edges of the body portion.

Preferably the body portion includes at least first and second members and the component portion is typically located between said first and second members when assembled.

Further preferably engagement means are provided on the first and/or second members to allow engagement of the same.

According to a further aspect of the present invention there is provided an electronic device, said device including a body portion and a component portion, wherein said component portion includes two or more display screens, each of said display screens provided for the display of data thereon, the body portion and the component portion arranged such that selective movement between the body and component portions allows the selection of a particular screen for the display of said data.

Specific embodiments of the invention are now described with reference to the accompanying drawings, wherein:-
Figures 1a to 1c illustrate various embodiments of an elevation of the device in accordance with the invention;
Figure 2 illustrates a view of the rear of the device in accordance with one embodiment of the invention;
Figure 3 illustrates a view of the body portion and the component portion separated; and
Figures 4a to d illustrate the body and component portions in further detail.

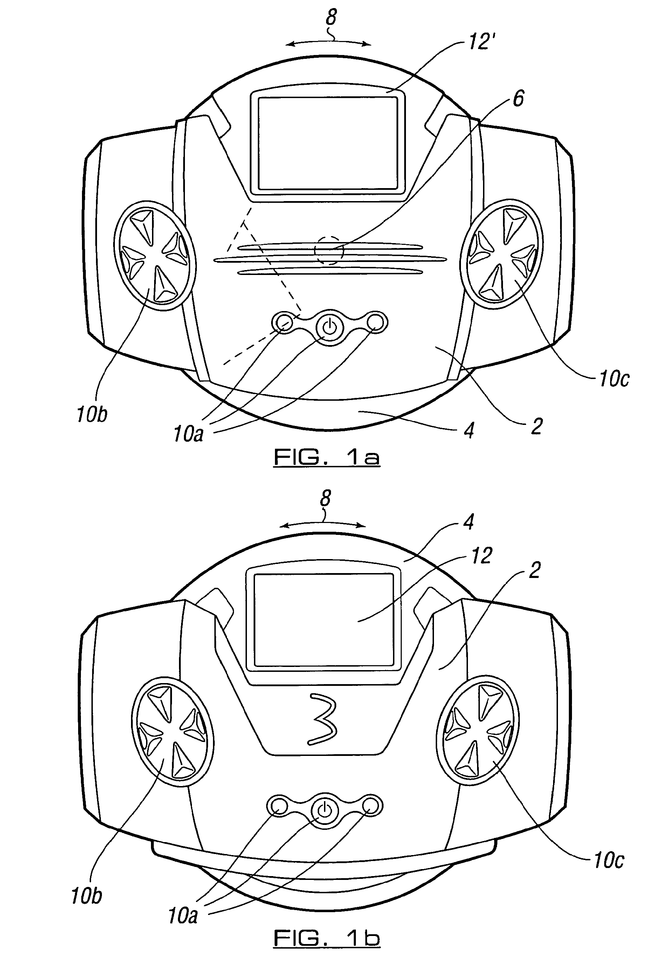

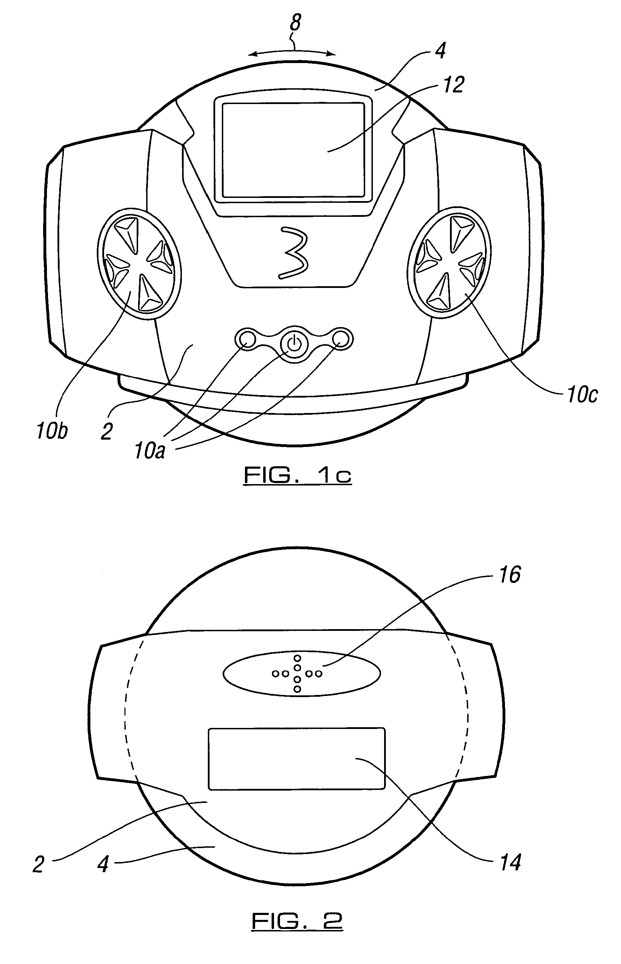

Referring firstly to Figures 1a to 1c, there are illustrated three views of potential designs of the device, each incorporating a body portion 2 and a component portion 4. The component portion 4 is mounted for rotation with respect to the body portion around a centre axis shown in broken lines 6 in Figure 1a, as indicated by arrow 8.

The body portion 2 incorporates a series of keys 10 which are connected to control means such that depression of the keys and/or depression of the keys on a particular location of the same, generates a control signal for game play. In this arrangement, keys 10a include an on/off control key, a control key for activation or deactivation of the sound, and a control key for the start of a game. The key 10b has a series of indicated areas which allow directional control signals to be provided by the selective depression of the control key at the indicated areas, and the control key 10c allows the generation of control signals to move an item on a particular display such as for example a ball.

It will be appreciated that the control keys can be provided in any suitable location on the body portion and/or component portion as required. The number and function of the control keys can also be varied as required.

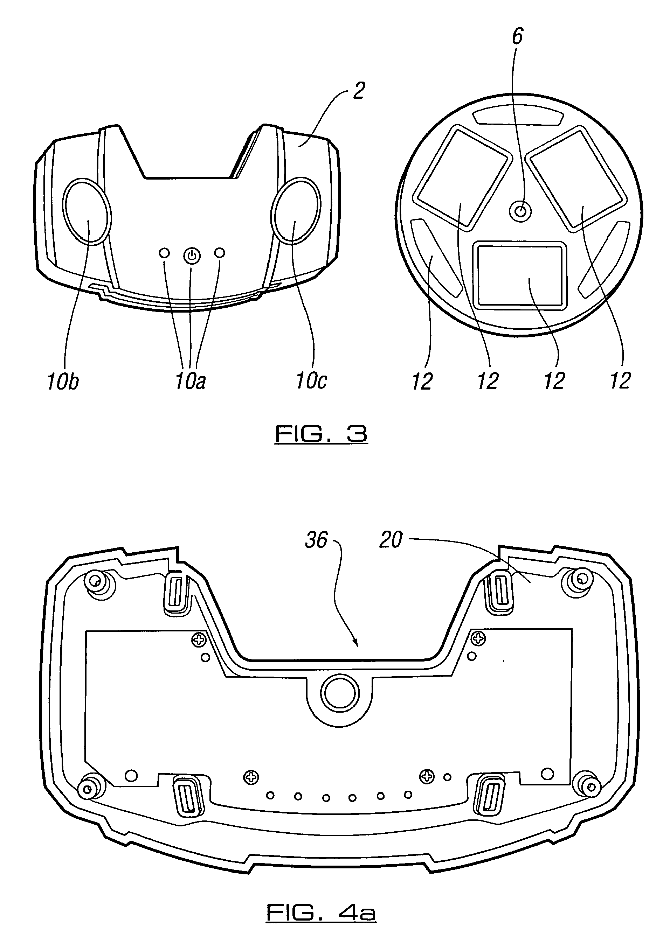

The component portion 4 has a series of display screens 12 as shown in figure 3, one of which is shown as being viewable 12' as shown in figures 1a-1c. The remaining two screens are hidden from view from the user by the body portion.

Turning now to Figure 2, there is illustrated a rear view of the device which shows the device having a location for a power source 14 in the form of batteries and a sound emitting means 16 to allow sound to be emitted during the playing of the game.

Turning now to Figure 3, there is illustrated the body 2 and component 4 portions separated and which shows various features as previously described.

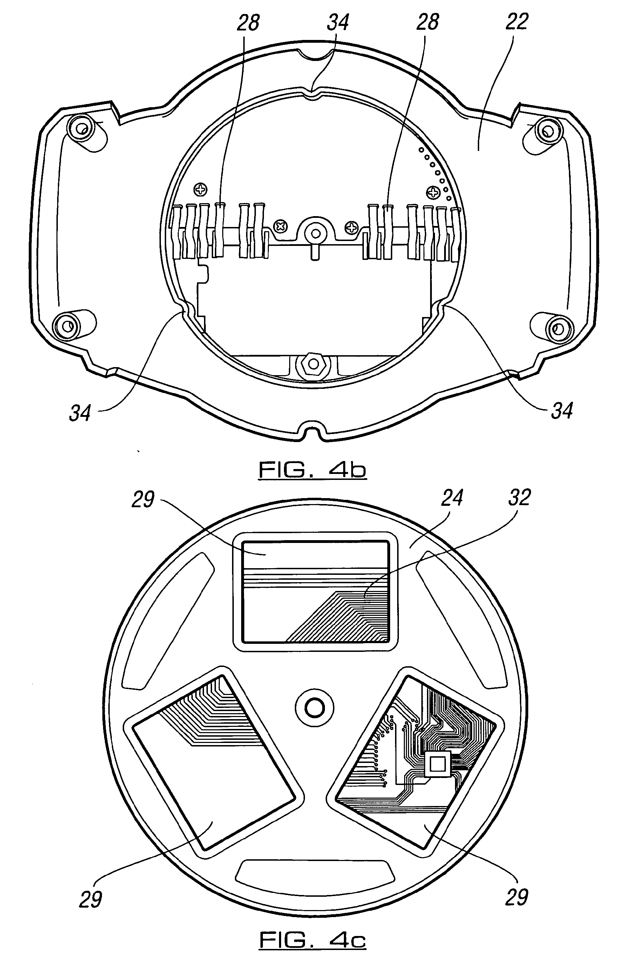

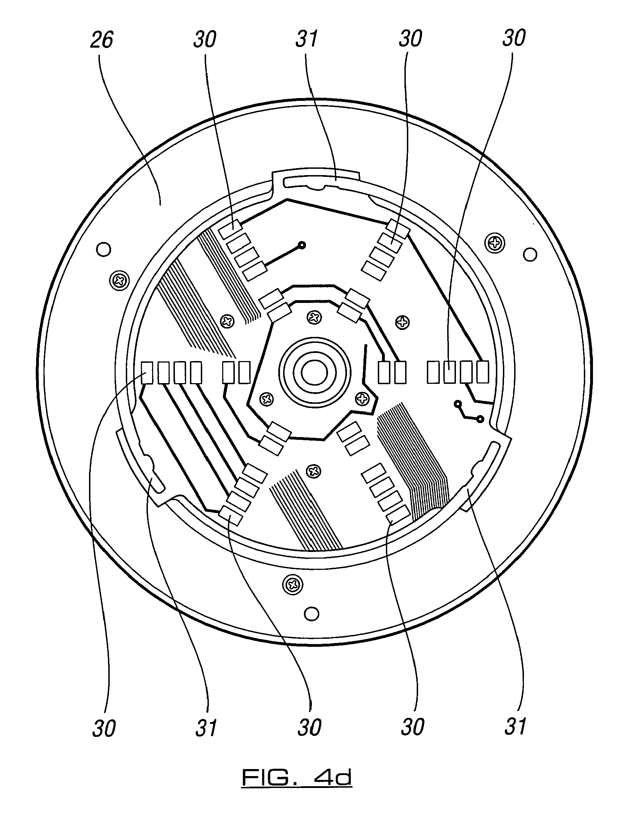

Turning now to Figures 4a-4d, there is illustrated in more detail the body and component portions. The body component comprises first and second members in the form of front and back parts 20, 22. When assembled, the portions 20, 22 are brought into engagement by the attachment of screws in one of the parts through screw holes in the other part. Other forms of engagement means for allowing engagement of the parts can be provided. Figures 4a and 4b illustrate the inner faces of the front and back parts 20, 22 of the body portion 2 respectively and Figures 4c and 4d illustrate the front 24 and rear 26 faces of the component portion 4 respectively, with the screens 12 removed and only the apertures 29 for the screens shown.

Front panel 20 of body portion 2 in the embodiment illustrated is shaped so as to have a viewing location defined therein. This viewing location is in the form of a recess 36. Retaining means 31 are provided on the component and body portions in such an arrangement that when a display screen is located in the viewing location, the display screen is activated. The other two screens are hidden from view between the body parts 20, 22 when one of the display screens is in the viewing location.

The Figure illustrates how, on the inner side of the back part of the body portion, there are provided a series of electrical contacts 28 which are biased towards a protruding position and protrude inwardly of the body portion when formed so as to make contact with the rear face 26 of the component portion 4 and the electrical contacts 30 formed thereon which are spaced at equivalent distance to the electrical contacts 28 on the body portion.

Retaining means 31 are provided on the rear part of the component portion and are shaped and resiliently biased so as to be received in indents 34 on the rear part of the body portion 2.

When the retaining means are received in the indents the user is aware of a greater resistance when trying to move the component portion with regard to the body portion and this indicates to the user that one of the display screens 12 on the component portion 4 is correctly positioned for activation of the display screen. A clicking noise may also accompany the engagement of the retaining means in the indents to provide an indication to a user of correct positioning. Furthermore, the electrical contacts 28, 30 are located such that electrical connection is achieved at that location and so communication between the power source and control keys of the body portion and the display screen is possible such that the display screen is activated and a game can be played thereon. In order to move to a further display screen, a movement force is required to be exerted on the component portion and/or body portion by the user so as to overcome the resistance of the retaining means. When sufficient force is applied, the retaining means is released from the indent in which it is engaged and can be moved to a new position.

Figure 4c illustrates the front face of the component portion and illustrates how the component portion includes a printed circuit board 32 with appropriate circuitry and IC chip located thereon so as to allow the appropriate game to be activated when a particular display screen is located in a correct position for activation. Thus, the body and component portions are capable of determining the particular location of the display screen on the component portion with respect to the body portion such that the appropriate game is activated when each of the particular display screens is provided in the viewing location.

In one embodiment, the display screens used are LCD displays which have a series of possible player and/or ball and/or other feature locations on the display screen which can be selectively activated for viewing on the display screen in response to key depressions by the user.

When a particular game has been finished or a particular level of a game has been finished on a particular display screen, then, in one embodiment, a sound or other indication means may be generated to illustrate to the user of the device that relative movement of the body and component portions will allow a further screen to be moved to the viewing position and that that screen can then be used for playing a further game or a further level of the same game.

Although the described embodiments show the component portion in the form of a disc member which rotates relative to and between an oblong shaped body portion, it will be appreciated that the component and body portions can be any suitable size, shape and/or design and the component portion can be located on top of and/or under said body portion.

The present invention therefore provides an electronic gaming device which, by the provision of a plurality of display screens, and the ability for relative movement between the portion on which the display screens are provided and the remainder of the device, allows the selective viewing and activation of the said display screens for the playing of a plurality of user selected games without the need for individual cartridges to be inserted.

## Claims

1. An electronic game device, said device including a body portion and a component portion, wherein said component portion includes two or more display screens, each of said display screens provided for the display of a particular game to be played via the device, the body portion and the component portion are arranged such that selective movement of or between the same allows the selection of a particular game to be played.

2. An electronic game play device according to claim 1, wherein the display screens are arranged a spaced distance apart on the component portion.

3. An electronic game play device according to claim 1 wherein selective relative movement of the component portion and/or body portion results in selective activation of at least one display screen for playing a selected game thereon.

4. An electronic game device according to claim 3, wherein the body portion is arranged to cover any display screen which is not activated.

5. An electronic game device according to claim 1, wherein retaining means are provided on the component and/or body portions for releasably retaining the component portion in a pre-determined position relative to the body portion.

6. An electronic game device according to claim 5, wherein the retaining means includes at least one resilient member interposed between the body portion and the component portion.

7. An electronic game device according to claim 5 wherein the retaining means is located on one of said body or component portions and at least one indent or recess is provided on the other of said portions to allow engagement therewith.

8. An electronic game device according to claim 6, wherein the at least one resilient member is deformable by the exertion of a moving force on either or both of the component and body portions to allow release of the retaining means, thereby allowing the component and body portion to be selectively moved.

9. An electronic game device according to claim 1, wherein the body portion includes one or more selectable keys for control of a selected game.

10. An electronic game device according to claim 1, wherein a game control circuitry is linked to a selected display screen.

11. An electronic game device according to claim 1, wherein each of the display screens has a specific game control circuitry associated therewith.

12. An electronic game device according to claim 1, wherein game control circuitry is provided in the body portion and/or component portion and when electrical contact is made between the body portion and the component portion, the game control circuitry can generate a display on a display screen in a position for activation.

13. An electronic game device according to claim 1, wherein the base portion includes a power source for powering the device.

14. An electronic game device according to preceding claim 1, wherein the component portion has three display screens provided thereon.

15. An electronic game device according to claim 1, wherein the body portion includes sound emitting means for emitting sounds relevant to a game being played on the device.

16. An electronic game device according to claim 1, wherein the component portion is rotatable with respect to the body portion so as to allow the selective positioning and activation of the display screens with respect to the body portion.

17. An electronic game device according to claim 1, wherein the component portion is mounted on a spindle with respect to the body portion and rotatable about the spindle which acts as the axis of rotation.

18. An electronic game device according to claim 1, wherein the device is provided as a hand held game device.

19. An electronic game device according to claim 1, wherein the display screens used are LCD display screens.

20. An electronic game device according to claim 1, wherein each of the display screens provides a different type or level of game.

21. An electronic game device according to claim 1 wherein a prompt facility is provided on the device to indicate to a user when they have completed a game or game level displayed on a display screen and that they should move the component portion with respect to the body portion to activate and access a further display screen.

22. An electronic game device according to claim 1 wherein the body portion includes at least first and second members which are brought into engagement to trap the component portion therebetween.

23. An electronic game device according to claim 1 wherein the body portion has at least one recess or window defined therein to form a viewing location for viewing of a display screen on said component portion.

24. An electronic device, said device including a body portion and a component portion, wherein said component portion includes two or more display screens, each of said display screens provided for the display of data thereon, the body portion and the component portion arranged such that selective movement between the body and component portions allows the selection of a particular screen for the display of said data.
